# EUROPEAN PATENT APPLICATION

(11) **EP 0 556 033 A1**
(43) Date of publication of application: **18.08.1993**
(21) Application number: 93300963.1
(22) Date of filing: 10.02.1993
(51) Int. Cl.: E04B 1/98

(54) **Vibration control device for structure**

(30) Priority: 14.02.1992 JP 28540/92
(71) Applicant: KAJIMA CORPORATION, Tokyo 107 (JP)
(72) Inventor: Sakamoto, Mitsuo, Minato-ku, Tokyo 107 (JP); Koshika, Norihide, Minato-ku, Tokyo 107 (JP); Nishimura, Tsao, Minato-ku, Tokyo 107 (JP); Sasaki, Katsuyasu, Minato-ku, Tokyo 107 (JP); Orui, Satoshi, Minato-ku, Tokyo 107 (JP)
(74) Representative: Godwin, Edgar James

(57) **Abstract**

A vibration control device of an active type is disclosed which comprises a first additional mass body (1) movable relative to the structure, spring means for giving the body (1) a period which synchronizes with the natural period of the structure, a second additional mass body (2) movable relative to the first additional mass body (1), and drive means (10-13) for applying a control force between the first and second additional mass bodies (1,2) in accordance with earthquake or the like. In addition to a laminated rubber support (3) provided as main spring means for synchronizing with the assumed natural period of the structure, auxiliary spring means such as a laminated rubber support (4) or a coil spring (4') is separately provided. The responses from the structure are reduced by adjusting the difference between the assumed and actual natural periods of the structure by use of the auxiliary spring means (4;4') and by providing the control force from the drive means at any earthquake times.

## Description

This invention relates to a vibration control device of an active type for reducing the response from a structure due to earthquake, wind or the like by applying a control force on the vibration control device.

A dynamic damper (designated as a DD thereafter) is available as a vibration control device of a passive type and there are some descriptions of an application thereof to structures, e.g., Japanese Pat. Laid-open No. 63-76932 and Japanese Pat. Publication No. 3-38686.

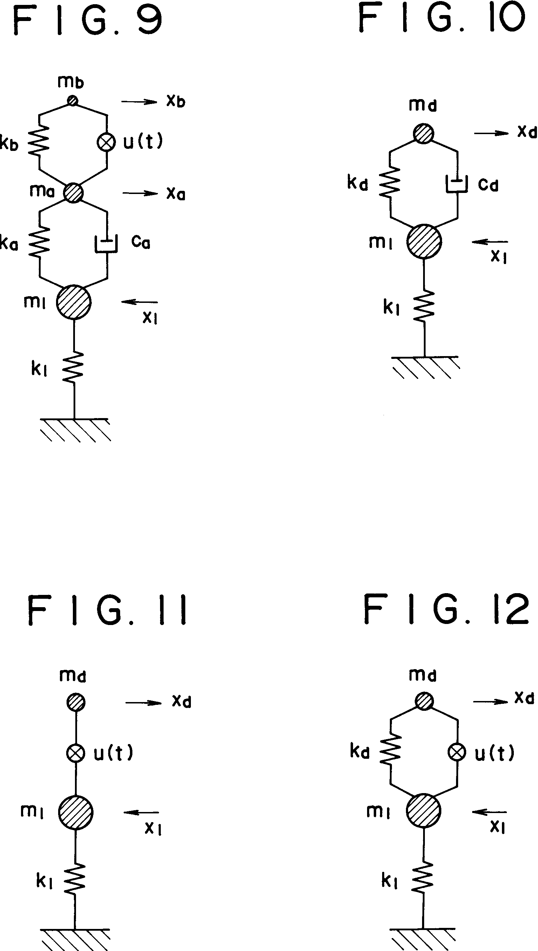

Fig. 10 shows a vibration model of a DD to be applied to a structure, wherein m₁ is a mass of a main body of the structure constituting a main vibration system and m_{d} is a mass of an additional mass body constituting a damping system. Also, k₁ is a spring constant of the main body of the structure. The main body of the structure having a mass m₁ and the additional mass body having a mass m_{d} are mutually connected through both a spring having a spring constant k_{d} and a damper having a damping coefficient c_{d}. Further, x₁ represents a displacement of the structure and x_{d} represents a displacement of a weight.

A natural angular frequency of the main vibration system is given by:${\text{ω₁ = (k₁/m₁)}}^{\text{1/2}}$

In the DD, a mass m_{d} of the damping system is normally designed so that the ratio of the mass m_{d} to the mass m₁ of the main vibration system may be set to approximately become:${\text{µ = m}}_{\text{d}} \text{/m₁ ≧ 0.01}$

At this time, the natural angular frequency of the damping system is given by:$\text{ωd = [1/(1 + µ)] ω₁}$

A damping coefficient c_{d} and a damping factor h_{d} are represented by the following equations, respectively.${\text{c}}_{\text{d}} {\text{= 2 m}}_{\text{d}} {\text{ω}}_{\text{d}} {\text{h}}_{\text{d}}$${\text{h}}_{\text{d}} {\text{= [3µ/ 8(1 + µ)]}}^{\text{1/2}}$

There are some descriptions [designated as an AMD (i.e., the abbreviation of Active Mass Driver)] as an active type vibration control device, e.g., US. Pat. No. 5,022,201 (Japanese Pat. Laid-open Nos. 1-275866, 1-275867, 1-275868 and 1-275869).

Fig. 11 shows a vibration model of an AMD, which applies a control force u(t) due to the hydraulic power or electromagnetic force of an actuator between the main body of the structure having a mass m_{d} and the additional mass body having a mass m_{d} to actively control the vibration of the structure.

In the AMD, usually assuming that a spring between the main body of the structure and the additional mass body constituting a vibration control device is set under a soft condition, i.e., ω_{d} ≦ (1/2)ω₁, the control force u(t) is given by the following equation:${\text{u(t) = G₁(dx₁/dx) + G₂(dx}}_{\text{d}} \text{/dt)}$
wherein G₁ is a gain in a circuit including an AGC circuit or the like against the response speed of the structure and attains the correspondences of large inputs through small inputs (wherein G₂ becomes a negative value). The second term in the above equation gives a damping property to the side of the additional mass body as well and attains a stability thereof by adding the product of a gain G₂ and a vibration speed on the side of the additional mass body to the control force.

There are some studies which try to add a spring having a spring constant k_{d} to the AMD described above in parallel with the control force due to the actuator as shown in the vibration model of Fig. 12 and to obtain a vibration control effect to a certain degree with the control force of the AMD by means of less control force in comparison with that of the AMD [designated as an ATMD (i.e., the abbreviation of Active Tuned Mass Damper) thereafter].

In an ATMD, a spring constant k_{d} is set so that the vibration of an additional mass body may synchronize with that of a structure, that is,${\text{ω}}_{\text{d}} \text{= ω₁}$
and the control force u(t) is, for example, given by the following equation,${\text{u(t) = G₁(dx₁/dt) + G₂(dx}}_{\text{d}} {\text{/dt) + G₃(x₁ - x}}_{\text{d}} \text{)}$
wherein G₃ is a gain having a negative sign and cancels a part of the inertial force applying on the additional mass body at a vibration time due to the third term in the above equation, so that the additional mass body may be vibrated by a lower control force.

Furthermore, Japanese Pat. Publication No. 3-70075 discloses a vibration control device of an active type having a pattern for controlling the structural vibration due to earthquake or the like by connecting a second additional mass body having a mass less than the additional mass body of the DD to the additional mass body of the DD through a spring and an actuator and by applying a control force on the second additional mass body from the actuator.

In the above-mentioned vibration control device, the DD has an advantage in that no energy supply to the device is necessary, but the vibration control effect is determined by the mass ratio of the additional mass body to the structure. Therefore, it is necessary to have an additional mass body having a large mass and it is difficult to expect to get a sufficient vibration control effect.

In case of the AMD, a large control effect can be expected by use of an additional mass body having a small mass in comparison with that in case of the DD. However, energy supply is necessary, and it is necessary to arrange additional facilities and equipment for the energy supply, the design of a control circuit for applying a predetermined control force in accordance with the responses of the structure and additional mass body at a vibrating time, the security of the stability in the device, how to prevent misoperation or the like.

As described above, the ATMD has an advantage in that the control force can be lessened in comparison with that in case of the AMD, but it takes a time to synchronize the vibration of the additional mass body with the vibration of the structure (ω_{d} = ω₁). Furthermore, the ATMD is characterized in that a portion of the inertial force can be canceled by providing a term corresponding to the spring force in order to obtain a large control effect by less control force, but it has a problem that a synchronizing period is newly generated for a period longer than the natural period of the structure in the periodic components of earthquake and then the amplitude of the additional mass body becomes large so that the control may be difficult.

It would be desirable to be able to provide a vibration control device of a double dynamic vibration reducer type which can be operated by a small supply energy and a small control force and effectively control the vibration of a structure against earthquake, while the vibration period of an additional mass body can easily be synchronized with the natural period of the structure.

Assuming an additional mass body in the basic constitution of a DD as a first additional mass body, a vibration control device of the present invention corresponds to what is added with a plurality of second additional mass bodies constituting AMD or ATMD to one first additional mass body, and comprises a first additional mass body having a predetermined mass and movable relative to a structure; spring means intervened between the structure and the first additional mass body so as to provide a period, which synchronizes with the natural period of the structure, to the first additional mass body; a second additional mass body having a predetermined mass and movable relative to the first additional mass body; and drive means for applying a control force between the first and second additional mass bodies.

In a preferred embodiment, a laminated rubber mounted on the structure and having an upper end connected to the first additional mass body so as to provide a horizontal spring to the first additional mass body, and auxiliary spring means for period adjustment intervened between the structure and the first additional mass body in a form of assisting the laminated rubber are both used in common for the spring means described above.

The laminated rubber becomes main spring means relative to the auxiliary spring means. First of all, the vibration period of the first additional mass body is adjusted by the laminated rubber to the assumed period corresponding to the natural period of the structure, so that its difference from the actual natural period of the structure can be adjusted by the auxiliary spring means. With reference to this laminated rubber, a spring having a long period can be obtained by using a hollow and laminated rubber having a ring shape in horizontal cross section. The laminated rubber in a vertical direction is now always limited to only one stage. A stable and long period can be obtained by using the laminated rubber overlapped in a vertical direction in two or more stages.

As for the auxiliary spring means, some materials can be considered, such as the auxiliary laminated rubber of a smaller type than the laminated rubber as the main spring means or a coil spring for connecting the structure to the first additional mass body in a horizontal direction, and it becomes possible to adjust the periods only by these replacement.

The heights of the laminated rubber and the auxiliary laminated rubber as the spring means are fixed by allowing the weight of the first additional mass body to be supported by a guide rail or the like installed on the structure, so that no buckling not produced, and therefore, a linear spring characteristic can be maintained up to a large stroke as a spring in a horizontal direction.

As means for providing a damping force to the first additional mass body, it can be considered to utilize one means for connecting the structure to the first additional mass body in a horizontal direction by an oil damper. However, the damping force providing means is not always restricted to this means, and various damping devices can be used. For example, a damping property can also be provided by using a high damping rubber for a rubber constituting the laminated rubber. Incidentally, it is described to use the damping device as a damper which has a construction for enhancing a damping property after it exceeds a control range and for recovering performance after the vibration of the structure returns, without any destructions at large earthquake times.

Furthermore, on the basis of the principle similar to that of the ATMD described above, it is possible to obtain a large vibration control effect by a less control force by synchronizing the vibration period of the first additional mass body with that of the second additional mass body. As synchronizing means (spring) in this case, for example, it can be considered to utilize a coil spring for connecting the first additional mass body to the second additional mass body in a horizontal direction. However, the synchronizing means in this case is not always limited to the coil spring, and various spring means can be used.

The drive means is not particularly restricted. For example, in case of constituting the drive means for driving the second additional mass body by mounting a rack on the first additional mass body and driving a pinion provided on the second additional mass body by a motor to engage the rack with the pinion, a satisfactory drive mechanism can be obtained.

The drive means is controlled by the response from a structure by the external forces of the vibration by earthquake and wind or on the basis of earthquake response analysis. However, since the vibration control device described above is constituted as a double dynamic vibration reducer type, it performs an active control for highly frequent earthquake (up to an earthquake intensity of 5) and strong wind, and also can be functioned as a vibration control device of a passive type for earthquake larger than such highly frequent earthquake. Namely, in case the response from the structure detected by a sensor exceeds a certain amount or the amplitude of the second additional mass body in the vibration control device exceeds a certain amount (this can be detected by mounting a limiter on the second additional mass body), the vibration control device can be functioned as a dynamic vibration reducer of a passive type by braking to stop the drive of the second additional mass body and fixing the second additional mass body to the first additional mass body.

By adapting the constitution described above, the present invention has also some advantages in the following.
(a) A large vibration control effect can be given by the drive of an extremely small mass body by adding the constitution of the AMD or ATMD having a driver to the DD, while assuming the DD as a basic construction.
(b) Since the weight of the second additional mass body to be driven is extremely small in comparison with the weight of the structure, the influences on the main body of the structure are extremely small, even though the driving portion may run away.

The foregoing and other objects and features of the invention will become apparent from the following description of preferred embodiments of the invention with reference to the accompanying drawings, in which:
Fig. 1 is a plan view showing a vibration control device as a preferred embodiment of the present invention;
Fig. 2 is a sectional view taken along a line A-A of Fig. 1;
Fig. 3 is a sectional view taken along a line B-B of Fig. 1;
Fig. 4 is a plan view in the removed state of a cover as another preferred embodiment of the present invention;
Fig. 5 is a front view corresponding to Fig. 4;
Fig. 6 is a side view of Fig. 4;
Fig. 7 is a sectional view taken along a line C-C of Fig. 4;
Fig. 8 is a sectional view taken along, a line D-D of Fig. 4;
Fig. 9 is a vibration model diagram showing a vibration control device of the present invention;
Fig. 10 is a vibration model diagram showing a DD of the prior art;
Fig. 11 is a vibration model diagram showing an AMD of the prior art; and
Fig. 12 is a vibration model diagram showing an ATMD of the prior art.

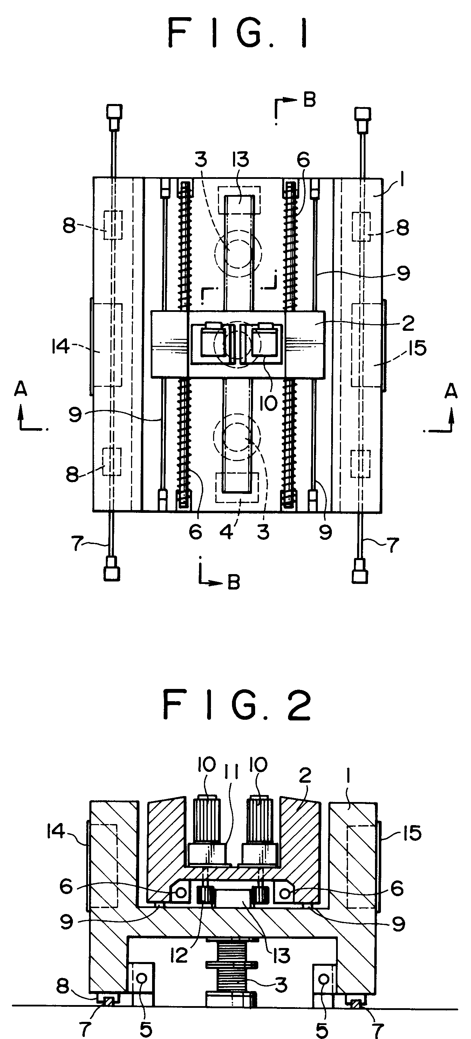

Figs. 1 through 3 show a vibration control device as a preferred embodiment of the present invention.

In this preferred embodiment, a first additional mass body 1 constituting a vibration control device has an approximate form of H letter in cross section orthogonal to the direction of vibration and is arranged to be slidable on a pair of low frictional guide rails installed on a structure. In the drawing, 8 indicates slidable portions.

The first additional mass body 1 is connected to a laminated rubber 3 on the underside of the center of the first additional mass body 1, and the weight of the first additional mass body is supported by guide rails 7. In the present preferred embodiment, however, the underside at the center of the first additional mass body 1 is connected to a structure by means of the laminated rubbers 3 installed at three places in a direction of vibration. Furthermore, the front and back portions of the first additional mass body 1 in the direction of vibration are connected to auxiliary laminated rubbers 4, used for period adjustment. In this design, the first additional mass body 1 is designed so as to adjust each spring constant of the laminated rubbers 3 to the assumed natural period of the structure so that the first additional mass body 1 is synchronized by the auxiliary laminated rubbers 4 with the natural period of the structure.

In the present preferred embodiment, each laminated rubber 3 is used by overlapping hollow laminated rubbers with easiness in long periodization over the other in two stages. Since the weight of the first additional mass body 1 is supported by the guide rails 7, no buckling is produced in each laminated rubber 3 and linear spring characteristics can be obtained in the range of a large stroke. Each auxiliary laminated rubber 4 is composed of laminated rubbers smaller than the laminated rubber 3 at the center of the first additional mass body 1, and the adjustment of the period can be made by replacing the auxiliary laminated rubbers 4.

With reference to a damping property thereof, a pair of oil dampers 5 in the direction of vibration are provided on both sides of the laminated rubber 3 to give a predetermined damping coefficient.

A second additional mass body 2 having an approximate form of H-letter in cross section perpendicular to the direction of vibration is provided in the concave portion at the upside of the first additional mass body 1 having an approximate form of H-letter. Further, the second additional mass body 2 is slidable on a pair of low frictional guide rails 9 provided on the first additional mass body 1.

In the drawing, 6 indicates each horizontal coil spring provided in parallel with the guide rails 9 to give a predetermined spring constant to the second additional mass body 2. Simply for keeping the neutral position of the second additional mass body 2, this spring constant usually provides a long period in comparison with the natural period of the structure. However, it is synchronized with the period of the first additional mass body 1 and the natural period of the structure in case of applying an ATMD-like control.

With reference to the drive of the second additional mass body 2, an AC servo motor 10 is installed on the second additional mass body 2 to rotate a pinion 12 through a reduction gear 11, and the second additional body 2 is arranged so as to be driven back and forth by engaging this pinion 12 with a rack 13 mounted on the first additional mass body 1. In the present preferred embodiment, the efficient utilization of the space and the simplicity of the maintenance have been attained by accommodating a controller 14 and a power panel 15 within the first additional mass body 1.

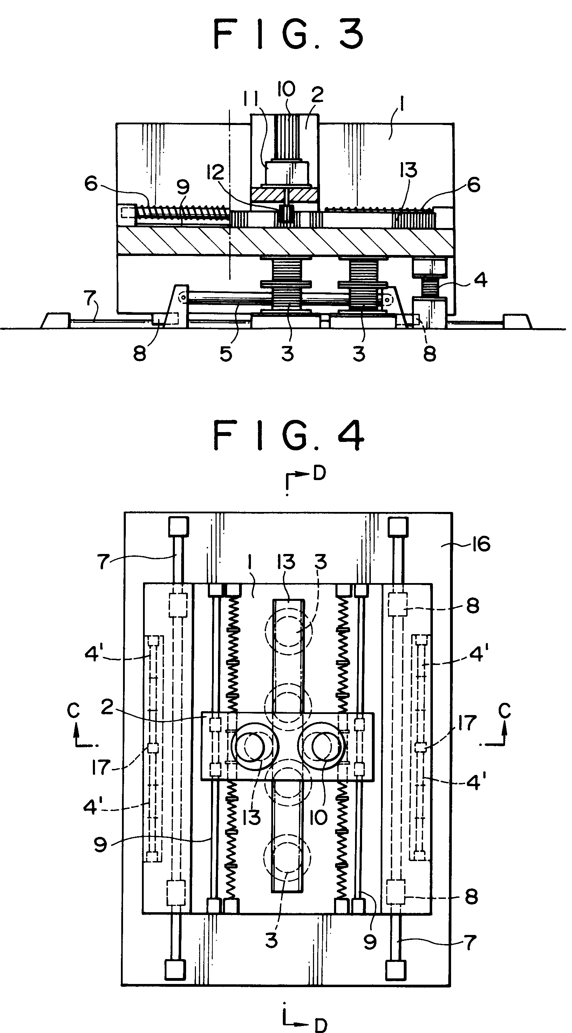

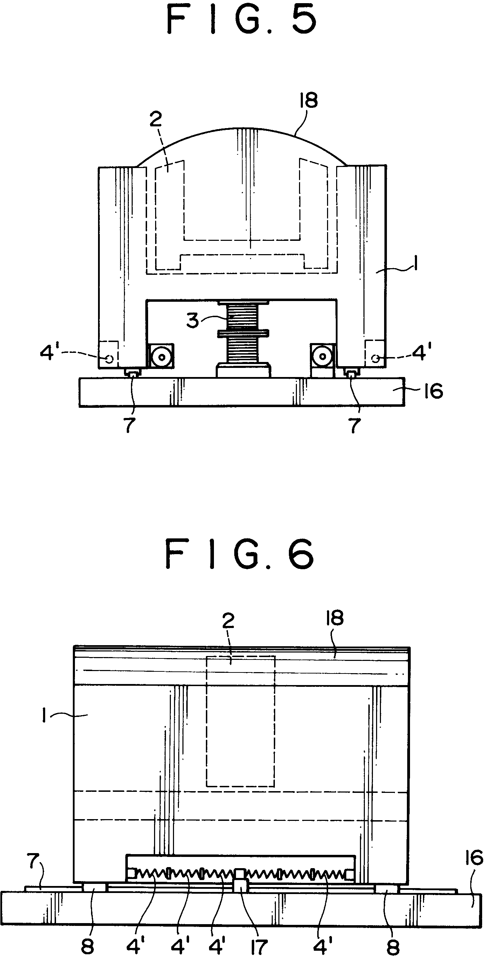

Figs. 4 through 8 show a vibration control device as another preferred embodiment of the present invention.

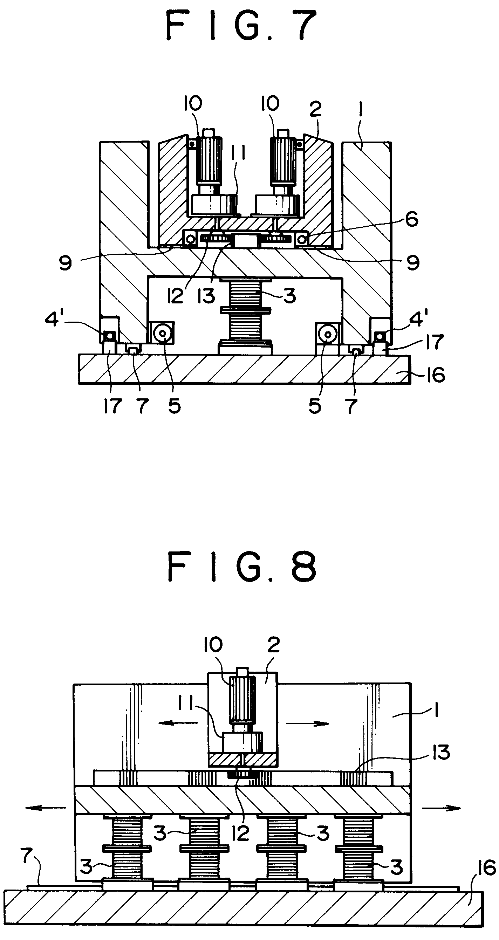

A basic constitution thereof is approximately similar to the preferred embodiment shown in Figs. 1 through 3. In the present preferred embodiment, however, coil springs 4' are used as auxiliary spring means for use of period adjustment relative to the first additional mass body 1, instead of the auxiliary laminated rubbers 4. As illustrated in Fig. 7, these coil springs 4' are provided in a plural number and in series within the concave portions on both side surfaces of the first additional mass body 1, respectively, and the longitudinal center of each coil spring is connected to a support portion 17 projecting over a pedestal 16 fixed to the structure.

By use of the coil springs 4', the stroke of the first additional mass body 1 can be taken in a large range in comparison with that of the auxiliary laminated rubbers 4 (in the present preferred embodiment, the stroke depends on the horizontal deformability of the laminated rubbers 3). Further, since the coil springs 4' are installed to the outside surface of the first additional mass body 1, the attaching and detaching of the coil springs 4' are easy.

In the drawing, 18 indicates a cover which covers the upper portion of the device. The cover is detachable whenever maintenance is necessary.

Fig. 9 illustrates a vibration control device of the present invention as a vibration model, and in case of assuming the additional mass body of the DD described in the section of the prior art as a first additional mass body, it corresponds to what combines this first additional mass body to the second additional mass body constituting the AMD or ATMD.

In the drawing, m₁ indicates a mass of a structure constituting a main vibration system, mₐ indicates a mass of first additional mass body, m_{b} indicates a mass of a second additional mass body, k₁ indicates a spring constant to the main body of the structure, kₐ indicates a spring constant of spring means to the first additional mass body, cₐ indicates a damping coefficient to the first additional mass body, k_{b} indicates a spring constant to the second additional mass body, and u(t) indicates a control force, respectively. Further, x₁ indicates a displacement of the structure, xₐ indicates a displacement of the first additional mass body, and x_{b} indicates a displacement of the second additional mass body, respectively.

Next will be explained an embodiment of the control method.

The mass of the first additional mass body is assumed as approximately 1/100 through 1/2000 of the mass of the structure, e.g., in accordance with the scale of the structure, vibration characteristics, and control means or the like. The mass of the second additional mass body is also assumed as approximately 1/20 through 1/100 of the mass of the first additional mass body, e.g.

By use of the parameters shown in Fig. 9, the angular frequencies ω₁, ωₐ,and ω_{b} of a main vibration system and the first and second additional mass bodies are represented by the following, respectively:${\text{ω₁ = (k₁/m₁)}}^{\text{1/2}}$${\text{ω}}_{\text{a}} {\text{= (k}}_{\text{a}} {\text{/m}}_{\text{a}} {\text{)}}^{\text{1/2}}$${\text{ω}}_{\text{b}} {\text{= (k}}_{\text{b}} {\text{/m}}_{\text{b}} {\text{)}}^{\text{1/2}}$

By synchronizing the angular frequencies with one another, the relation of the following equation can be established:${\text{ω₁ ≒ ω}}_{\text{a}} {\text{≒ ω}}_{\text{b}}$

There are, however, some cases of applying a conventional AMD-like control by setting ω_{b} as a sufficiently small value in comparison with those of ω₁ and ωₐ without synchronizing with one another.

Furthermore, the relationship among the preceding structure and the masses of the first and second additional mass bodies can be represented by:${\text{m}}_{\text{a}} \text{/m₁ = 1/100 to 1/2000}$${\text{m}}_{\text{b}} {\text{/m}}_{\text{a}} \text{= 1/10 to 1/20}$

A control force for controlling the movement of a driver serving as the second additional mass body is defined by the following equation, e.g.,${\text{u(t) = G₁(dx₁/dt) + G₂(x}}_{\text{a}} {\text{-x₁) + G₃(dx}}_{\text{b}} {\text{/dt) + G₄(x}}_{\text{b}} {\text{-x}}_{\text{a}} \text{)}$
wherein each of G₁, G₂, G₃,and G₄ is a gain in each term of the above equation (1), respectively.

Energy is mainly consumed by a damper function (damping coefficient cₐ) to the first additional mass body.

Since the angular frequency ωₐ of the first additional mass body is synchronized with the angular frequency ω₁ of the main vibration system, it forms a dynamic damper (dynamic vibration reducer). It is, however, desirable to slightly increase the damping coefficient cₐ to the first additional mass body in comparison with the optimum design value of the dynamic damper.

Then, the control force u(t) is applied so that the first additional mass body (mass mₐ) is vibrated. In case of the above equation (1), the speed (dx₁/dt) of the structure is fed back and the first additional mass body (mass mₐ) can amplify the motion of a normal DD (dynamic damper), resulting in the increase in vibration control effect.

The reaction force from the control force u(t) is treated by use of the inertial force from the second additional mass body (mass m_{b} = 1/10 mₐ to 1/20 mₐ).

The third term in the above equation (1) is available for providing a damping property to the second additional mass body as well by use of the relationship of action and reaction, and the vibration stabilization for the second additional mass body can be attained thereby.

Furthermore, the spring force (spring constant k_{b}) absorbs the greater part of the force needed to control when the angular frequency ω_{b} of the second additional mass body is also synchronized with the angular frequency ω₁ of the main vibration system by use of the principle of the ATMD described above, and therefore, the necessary force for the control becomes further smaller.

Namely, a control force [u(t)], an inertial force [m_{b}(dx_{b}/dt)²] and a spring force [k_{b}(x_{b}-xₐ)] act on the second additional mass body and the following relation is given by:$\text{(Control Force) + (Inertial Force) + (Spring Force) = 0}$

Therefore, the inertial and the spring forces cancel with each other, so that the control force can be made smaller.

The control described above is applied to highly frequent earthquakes and winds. The vibration control device may desirably have a constitution for stopping the drive of the second additional mass body in order to prevent any damages of the device against a large earthquake beyond the capacity of the device. Even in this case, the device can be functioned as a dynamic vibration reducer of a passive type to give a vibration control effect as a dynamic vibration reducer.

## Claims

1. A vibration control device for a structure comprising:
a first additional mass body (1) having a predetermined mass and movable relative to the structure;
spring means which are arranged between the structure and the first additional mass body (1) so as to provide the first additional mass body (1) with a period, which synchronizes with the natural period of said structure;
a second additional mass body (2) having a predetermined mass and movable relative to the first additional mass body (1); and
drive means (10-13) for applying a control force between the first and second additional mass bodies (1,2);
characterised in that the spring means comprises at least one main, laminated rubber, spring means (3) whose upper end is connected to the first additional mass body (1), and at least one auxiliary spring means (4;4') for period adjustment, arranged between the structure and the first additional mass body (1).

2. A vibration control device as claimed in claim 1, wherein the auxiliary spring means is an auxiliary laminated rubber spring means (4) whose upper end is connected to the first additional mass body (1).

3. A vibration control device as claimed in claim 1, wherein the auxiliary spring means is a coil spring (4') for connecting the structure to the first additional mass body (1) in a horizontal direction.

4. A vibration control device as claimed in any preceding claim, wherein the main spring means (3) comprises a hollow laminated rubber member having a ring shape in cross section.

5. A vibration control device as claimed in any preceding claim, including at least one guide rail (7) for supporting the weight of the first additional mass body (2) and allowing it to slide thereon, the guide rail being mounted on the structure.

6. A vibration control device as claimed in any preceding claim, including at least one oil damper (5) for connecting the structure and the first additional mass body (1) in a horizontal direction.

7. A vibration control device as claimed in any preceding claim, wherein the first and second additional mass bodies (1,2) are connected in a horizontal direction by at least one coil spring (6) for synchronizing the vibration period of the second additional mass body (2) with the vibration period of the first additional mass body (1).

8. A vibration control device as claimed in any preceding claim, wherein the first additional mass body (1) is provided with at least one guide rail (9) for supporting the weight of the second additional mass body (2) and allowing it to slide thereon.

9. A vibration control device as claimed in any preceding claim, wherein the drive means comprises a rack (13) provided on one of the additional mass bodies (1,2), a pinion (12) provided on the other of the additional mass bodies (1,2) and engaged with the rack (13), and a motor (10) for rotating the pinion (12).
